# FASCICULE DE BREVET EUROPEEN

(11) **EP 0 701 214 B1**
(45) Date de publication et mention de la délivrance du brevet: **30.01.2002**
(21) Numéro de dépôt: 95410091.3
(22) Date de dépôt: 04.09.1995
(51) Int. Cl.: G06F 13/12, G06F 13/16

(54) **Système de traitement multitâches**
Multiaufgabenverarbeitungssystem
Multi-tasking processing system

(30) Priorité: 06.09.1994 FR 9410822
(43) Date de publication de la demande: 13.03.1996
(73) Titulaire: STMicroelectronics S.A., 92120 Montrouge (FR)
(72) Inventeur: Harrand, Michel, F-38120 Saint Egrève (FR); Henry, Michel, F-38120 Le Fontanil (FR)
(74) Mandataire: de Beaumont, Michel

(56) Documents cités:
- EP-A- 0 288 649
- GB-A- 1 529 582
- US-A- 4 418 343

## Description

La présente invention concerne un système de traitement multitâches dans lequel des données doivent subir suocessivement divers traitements ayant une certaine indépendance les uns des autres.

Pour réaliser un système multitâches relativement lent, on a recours le plus souvent à un microprocesseur effectuant les traitements en temps partagé. Cette solution a l'avantage d'être particulièrement simple et souple, c'est-à-dire que si l'une des tâches doit être modifiée, il suffit de modifier une partie de programme correspondant.

Pour effectuer des tâches à cadence élevée, un microprocesseur ne suffit plus. On peut alors avoir recours à des systèmes entièrement câblés, qui sont les plus rapides. Toutefois, les systèmes câblés sont complexes et particulièrement rigides, c'est-à-dire que si un traitement est modifié, on doit modifier la partie correspondante du circuit.

Une solution intermédiaire consiste à répartir les tâches entre des processeurs de signal numérique programmables (DSP), ce qui permet de conserver une grande souplesse. Toutefois, cette solution est particulièrement coûteuse car les processeurs de signal numérique sont prévus pour être adaptés à un grand nombre de situations et présentent pour cela un grand nombre de possibilités qui ne seront pas toutes exploitées dans un système de traitement multitâches.

Un systeme comprenant un séquenceur et une pluralité d'opérateurs est divulgué dans le document EP-A-0288649.

Un objet de la présente invention est de prévoir un système de traitement multitâches rapide, souple, et simple.

Pour cela, la présente invention prévoit un système de traitement multitâches comprenant un bus de données et un bus de commande. Chacun d'une pluralité d'opérateurs est prévu pour effectuer un traitement déterminé par une instruction et est susceptible d'émettre une requête de commande pour recevoir une instruction par le bus de commande et d'émettre une requête de transfert en réponse à un acquittement de la requête de commande, pour recevoir ou fournir par le bus de données des données en cours de traitement, certains des dits operateurs émettent des dites requêtes de commande pour fournir des paramètres sur le bus de commande. Un contrôleur mémoire arbitre les requêtes de transfert et gère les transferts de données sur le bus de données entre les opérateurs et une mémoire. Un séquenceur arbitre les requêtes de commande, détermine des instructions à fournir aux opérateurs et gère le transfert de ces instructions par le bus de commande, le séquenceur étant prévu pour lire ces paramètres et déterminer en fonction de ceux-ci une instruction à fournir à un opérateur.

Selon un mode de réalisation de la présente invention, le contrôleur mémoire est relié au bus de commandé pour recevoir du séquenceur, avant un acquittement d'une requête de transfert, une instruction indiquant une zone mémoire dans laquelle le contrôleur mémoire accède aux données à échanger par le bus de données avec l'opérateur ayant émis la requête de transfert.

La présente invention peut être appliquée à un système de traitement d'image. Alors, parmi les opérateurs, il y a un circuit d'entrée de pixels pour fournir à la mémoire des pixels d'une image à coder ; un circuit d'estimation de mouvement pour recevoir de la mémoire les pixels sous forme de macroblocs successifs ainsi que des fenêtres de recherche correspondantes, et pour fournir sur le bus de commande un vecteur de mouvement et une distorsion permettant de déterminer le type de codage que doit subir un macrobloc courant ; un circuit de compression pour recevoir par le bus de commande le type de codage du macrobloc courant, recevoir de la mémoire le macrobloc courant et, selon le type de codage, un macrobloc prédicteur, et pour fournir à la mémoire un macrobloc en format intermédiaire correspondant au macrobloc courant comprimé ; et un circuit de sortie de données codées pour recevoir de la mémoire les macroblocs traités.

Selon un mode de réalisation de la présente invention, parmi les opérateurs, il y a le circuit de compression comprenant un circuit de transformée cosinus discrète et un circuit de quantification utilisant un coefficient de quantification reçu par le bus de commande en même temps que le type de macrobloc ; un circuit de codage à longueur variable (VLC) pour recevoir un en-tête de macrobloc contenant le vecteur de mouvement, le coefficient de quantification et le type de macrobloc, recevoir de la mémoire le macrobloc en format intermédiaire, fournir à la mémoire des données codées correspondant à l'en-tête et au macrobloc en format intermédiaire, et fournir sur le bus de commande une information sur l'occupation des données codées dans la mémoire ; et un circuit d'interface avec un microprocesseur pour fournir au microprocesseur des paramètres par le bus de commande afin que le microprocesseur détermine des instructions ou des paramètres à fournir à des opérateurs par le bus de commande.

Selon un mode de réalisation de la présente invention, les paramètres fournis au microprocesseur comprennent la distorsion et l'occupation des données codées dans la mémoire, à l'aide desquels le microprocesseur détermine le choix de codage des macroblocs suivants.

Selon un mode de réalisation de la présente invention, les paramètres fournis au microprocesseur comprennent l'en-tête que le microprooesseur code et fournit au circuit VLC, ce-dernier étant prévu pour recevoir l'en-tête codé et le fournir directement devant les données codées correspondant au macrobloc.

Selon un mode de réalisation de la présente invention, parmi les opérateurs, il y a un circuit d'entrée de données codées pour fournir à la mémoire un paquet de données codées ; un circuit de décodage à longueur variable (VLD) pour recevoir un paquet de données codées de la mémoire, et fournir à la mémoire un macrobloc en format intermédiaire précédé d'un en-tête ; un circuit de reconstruction pour recevoir de la mémoire le macrobloc en format intermédiaire, son en-tête, et, selon les paramètres contenus dans l'en-tête, un macrobloc prédicteur, et pour fournir un macrobloc reconstruit correspondant à la mémoire ; et un circuit d'affichage pour recevoir de la mémoire l'image constituée des macroblocs reconstruits.

Selon un mode de réalisation de la présente invention, la mémoire est une mémoire vidéo fournissant des pixels à afficher au circuit d'affichage par un bus vidéo géré par le contrôleur mémoire.

Ces objets, caractéristiques et avantages ainsi que d'autres de la présente invention seront exposés dans la description suivante de modes de réalisation particuliers faite à titre non-limitatif à l'aide des figures jointes parmi lesquelles :
la figure 1 représente l'architecture d'un mode de réalisation de système de traitement multitâches selon l'invention ;
la figure 2 représente des éléments caractéristiques d'un opérateur du système de la figure 1 ; et
la figure 3 représente un mode de réalisation de circuit de traitement d'image selon l'invention.

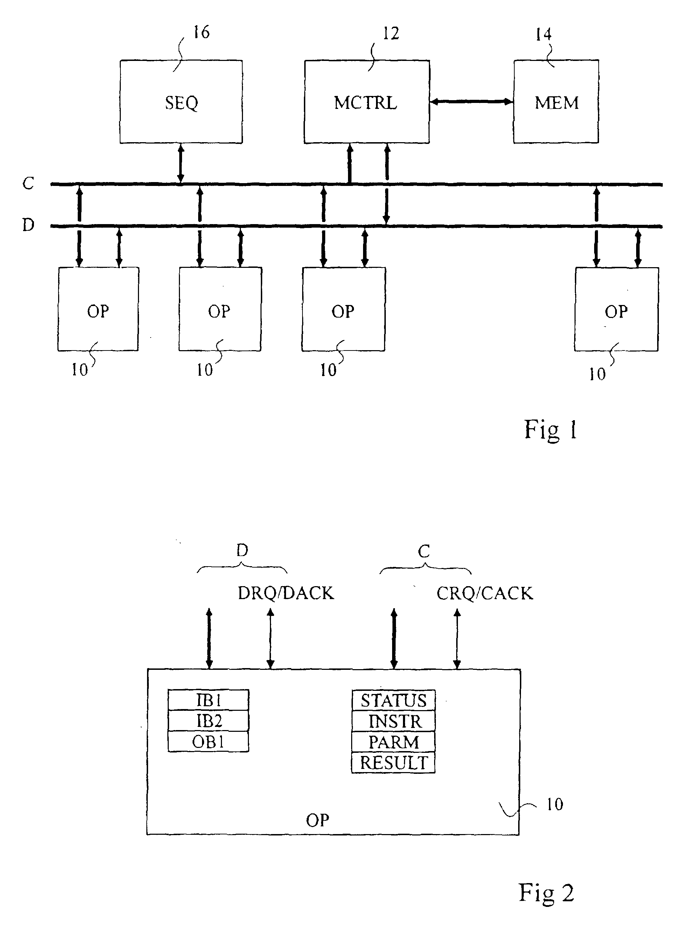

A la figure 1, un système multitâches selon l'invention comprend une pluralité d'opérateurs 10 reliés à deux bus, un bus de commande C et un bus de données D. Par le bus D, géré par un contrôleur mémoire 12, les opérateurs 10 échangent des données en cours de traitement avec une mémoire 14. Par le bus C, géré par un séquenceur 16, les opérateurs reçoivent des instructions de traitement.

Il y a quatre principaux types d'opérateurs. Un premier type reçoit des données de l'extérieur et les fournit à la mémoire 14, éventuellement après un traitement. Un deuxième type reçoit des données de la mémoire 14, les traite d'une manière spécifique, et fournit les données traitées à la mémoire 14. Un troisième type reçoit des données de la mémoire 14 et établit en fonction de celles-ci des paramètres à fournir par le bus de commande C à d'autres opérateurs. Enfin, le quatrième type reçoit des données de la mémoire 14 et les fournit à l'extérieur, éventuellement après un traitement.

Pour chaque tâche affectée à un opérateur (recevoir ou fournir des données ou fournir des paramètres), l'opérateur émet deux requêtes successives. La première, requête de commande, est émise pour recevoir une instruction par le bus de commande C. La deuxième, requête de transfert, est émise après la réception de l'instruction pour échanger des données avec la mémoire 14 par le bus de données D. Des données reçues sont, le cas échéant, traitées en fonction de l'instruction précédemment reçue.

Le séquenceur 16 est prévu pour arbitrer les requêtes de commande des opérateurs 10 et fournir, par le bus de commande C, une instruction à un opérateur 10 prioritaire. Le séquenceur 16 est un processeur multitâches qui exécute, pour chaque requête de commande, un programme spécifique prévu pour déterminer l'instruction et la fournir à l'opérateur. Ce programme détermine éventuellement l'instruction en fonction de paramètres préalablement fournis par d'autres opérateurs. Une instruction peut simplement consister en un signal d'activation de l'opérateur. Une instruction plus complexe peut comprendre des paramètres et une commande particulière parmi plusieurs commandes possibles.

Le contrôleur mémoire 12 est prévu pour arbitrer les requêtes de transfert des opérateurs 10 et effectuer le transfert d'un paquet de données, par le bus D, entre un opérateur prioritaire et la mémoire 14, en calculant les adresses correspondantes. Le contrôleur mémoire 12 est également un processeur multitâches qui exécute, pour chaque requête de transfert, un programme spécifique de calcul d'adresses et de commande du bus de données D. Les calculs d'adresses sont par exemple récursifs à partir d'une adresse de départ, la taille du paquet de données étant une constante du programme spécifique. Les calculs d'adresses doivent être relativement rapides car les transferts s'effectuent pratiquement en continu à la cadence d'une horloge du système.

Une activation d'un opérateur par une instruction va, dans le cas général, entraîner un certain nombre de transferts successifs des données d'un paquet entre l'opérateur et la mémoire 14. Ainsi, la cadence à laquelle le séquenceur 16 fournit des instructions aux opérateurs est faible par rapport à la cadence d'horloge. De ce fait, le séquenceur 16 peut effectuer des calculs complexes plus longs que ceux effectués par le contrôleur mémoire 12, notamment calculer les adresses de départ des paquets à transférer par le contrôleur mémoire 12. Ces adresses de départ sont alors fournies au contrôleur mémoire par le bus de commande C, le contrôleur mémoire étant connecté au bus C comme un opérateur.

En outre, le bus de commande C peut avantageusement être du type à multiplexage de données et d'adresses, c'est-à-dire que les mêmes lignes du bus servent d'abord à présenter une adresse et ensuite la donnée (instruction) correspondante. Ceci permet de notablement réduire la surface du bus de commande.

La figure 2 représente un exemple d'interfaoe d'un opérateur 10 avec les bus C et D. L'opérateur peut comprendre jusqu'à plusieurs mémoires tampon d'entrée IB (IB1 et IB2 dans l'exemple) et de sortie OB (OB1 dans l'exemple). Chacune de ces mémoires tampon est acoessible à une adresse spécifique par le bus de données D.

L'opérateur 10 comprend également un registre d'état (STATUS), un registre d'instruction (INSTR), éventuellement un ou plusieurs registres de paramètre (PARM), et éventuellement un ou plusieurs registres de résultat (RESULT). Les registres d'état et de résultat sont accessibles en lecture et les registres d'instruction et de paramètre en écriture à des adresses spécifiques par le bus de commande C.

En outre, l'opérateur est muni de deux systèmes de requête/acquittement, l'un (DRQ, DACK) associé au bus de données D et l'autre (CRQ, CACK) associé au bus de commande C. De nombreux systèmes de requête/acquittement peuvent être envisagés. Par exemple, le séquenceur 16 émet, après avoir fourni une instruction, une adresse particulière dite adresse de scrutation. Chacun des opérateurs 10 répond à cette adresse en activant ou non, selon que l'opérateur émet une requête ou non, un bit spécifique du bus C. Le séquenceur 16, en lisant alors la donnée présente sur le bus C, connaît les opérateurs qui émettent une requête et effectue l'arbitrage, l'acquittement consistant à fournir une instruction à l'opérateur prioritaire. Le système de requête/acquittement associé au bus de données D comprend, par exemple, une ligne de requête DRQ par mémoire tampon d'entrée/ sortie et une ligne d'acquittement DACK correspondante. Lorsqu'une requête de transfert est servie par le contrôleur mémoire, ce dernier active brièvement la ligne d'acquittement DACK correspondante pour que l'opérateur désactive sa ligne de requête.

Le fonctionnement d'un système de traitement selon l'invention est en général le suivant. Un opérateur qui est prêt à effectuer une tâche émet une requête de commande vers le séquenceur 16. Au moment où le séquenceur 16 décide de servir cette requête, il exécute un programme correspondant qui commence par lire le registre d'état de l'opérateur. Le registre d'état indique ce que l'opérateur est prêt à faire, par exemple recevoir un paquet de données. Ensuite, le programme du séquenceur détermine l'adresse de départ du paquet et la fournit au contrôleur mémoire 12, cette adresse étant mise en attente dans un tampon du contrôleur mémoire. Enfin, le programme du séquenceur active l'opérateur en écrivant une instruction dans son registre d'instruction, et éventuellement des paramètres dans ses registres de paramètre. On dira que le séquenceur "lance" une tâche de transfert. Aussitôt, l'opérateur émet des requêtes de transfert vers le contrôleur mémoire 12. Lorsque le contrôleur mémoire 12 décide de servir une de ces requêtes, il exécute un programme correspondant qui commence par lire l'adresse de départ en attente dans le tampon du contrôleur mémoire. Ce programme se met alors à transférer les données du paquet entre l'opérateur et la mémoire 14 à des adresses calculées à partir de l'adresse de départ. Pendant ce transfert, le séquenceur 16 traite la commande d'un autre opérateur.

La tâche de transfert en cours du contrôleur mémoire 12 peut être interrompue par une tâche de transfert prioritaire. Alors, le programme en cours d'exécution par le contrôleur mémoire 12 effectue une sauvegarde de contexte et cède le contrôle au programme de transfert prioritaire qui utilise une nouvelle adresse de départ mise en attente dans le tampon du contrôleur mémoire. Lorsque le programme prioritaire se termine, le contrôle est de nouveau cédé au programme interrompu qui effectue une restauration de contexte pour continuer le transfert interrompu.

Les tâches du séquenceur 16 sont espacées et occupent faiblement le bus de commande. Par conséquent, il n'est pas nécessaire de prévoir un mécanisme d'interruption du séquenceur, ce qui simplifie sa structure.

Pour un bon fonctionnement du système, il convient de ne transférer des données de la mémoire vers un opérateur que lorsque ces données sont effectivement disponibles dans la mémoire et que le tampon de sortie de l'opérateur n'est pas plein. Pour cela, on utilise dans le séquenceur, par exemple, un mécanisme de sémaphore classique associé à chaque tampon d'entrée des opérateurs. Lorsqu'un programme expéditeur du séquenceur lance une tâche d'écriture dans la mémoire d'un paquet de données, il incrémente du nombre de données du paquet un premier sémaphore associé au tampon d'entrée destinataire. De même, un deuxième sémaphore contient le nombre de places disponibles dans le tampon de sortie de l'opérateur destinataire, le contenu de ce deuxième sémaphore étant incrémenté par le programme du séquenceur associé à ce tampon de sortie. Ainsi, avant de lancer la tâche de fourniture d'un paquet de données à l'opérateur à servir, le programme en cours du séquenceur vérifie les sémaphores. Si le transfert est possible, le programme décrémente le premier sémaphore du nombre de données du paquet et lance la tâche.

On utilise un mécanisme similaire pour un opérateur qui demande à fournir des données, en vérifiant si la zone mémoire où les données doivent être écrites n'est pas pleine.

Certains opérateurs peuvent être prévus pour fournir seulement un résultat dans le registre de résultat en fonction de données reçues. Dans ce cas, la procédure est similaire à celle d'un opérateur qui demande à fournir des données sauf que le séquenceur ne fait alors que lire ce résultat par le bus de commande C.

Bien entendu, il est possible qu'un opérateur soit prêt à effectuer plusieurs tâches. En acquittant la requête de l'opérateur, le séquenceur connaîtra cette situation grâce au registre d'état. Le séquenceur peut alors lancer les tâches de transfert l'une après l'autre, selon l'ordre de priorité de ces tâches.

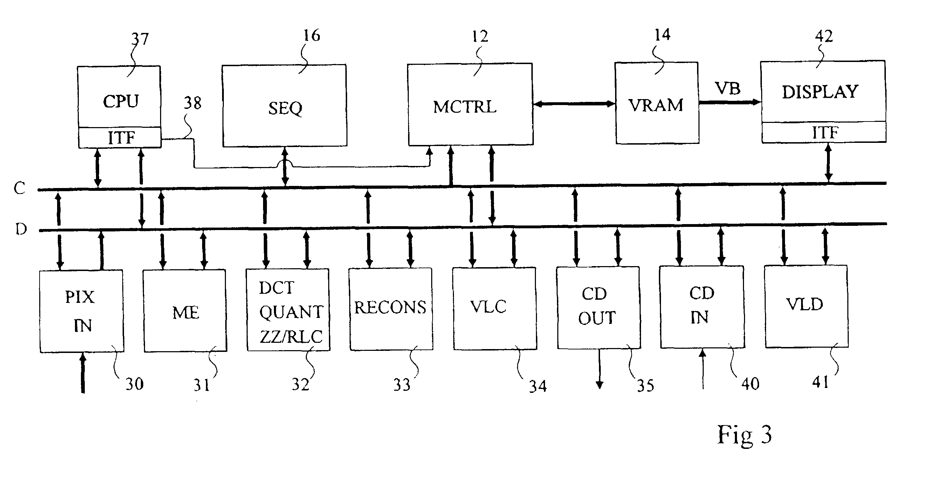

La figure 3 représente un système de codage et décodage d'image réalisé selon l'architecture de l'invention. Il s'agit dans cet exemple d'un codeur/décodeur d'image selon les normes H.261.

Un opérateur 30 est un circuit d'entrée de données sous forme de pixels. Ce circuit reçoit des pixels d'un dispositif externe au système, par exemple d'une caméra et peut avoir divers rôles tels que la transformation du format de données fourni par la caméra en un format de données compatible avec les normes H.261. Cet opérateur 30 n'est prévu que pour fournir des données à la mémoire 14. La tâche associée du contrôleur mémoire 12 est de stocker les pixels fournis ligne par ligne par l'opérateur 30 dans une zone tampon de la mémoire 14.

Un opérateur 31 est un estimateur de mouvement qui reçoit les pixels précédemment fournis, par l'opérateur 30 à la mémoire. Ces pixels sont reçus macrobloc par macrobloc, chaque macrobloc comprenant des matrices de chrominance et de luminance correspondant à un carré d'image de 16x16 pixels. Pour chaque macrobloc, l'estimateur de mouvement 31 reçoit une fenêtre de recherche correspondante lue dans une zone de la mémoire où une image précédemment codée a été reconstruite. Le rôle de l'estimateur de mouvement 31 est de trouver dans la fenêtre de recherche un macrobloc prédicteur le plus ressemblant possible au macrobloc en cours de traitement. Lorsque le macrobloc prédicteur est trouvé, l'estimateur de mouvement fournit un vecteur pour déterminer la position de ce macrobloc prédicteur et fournit des paramètres, notamment une "distorsion", permettant d'évaluer la similitude entre le macrobloc prédicteur et le macrobloc en cours de traitement.

Ainsi, l'opérateur 31 comprend deux tampons d'entrée couplés au bus D (pour recevoir respectivement les macroblocs en cours de traitement et les fenêtres de recherche correspondantes) et fournit un résultat (par un registre de résultat) sur le bus de commande C, notamment un vecteur de mouvement et une distorsion. En outre, l'estimateur de mouvement 31 peut recevoir plusieurs instructions et paramètres par le bus de commande. Par exemple, lorsque le macrobloc en cours de traitement se trouve loin des bords de l'image, le traitement est normal, c'est-à-dire que l'on utilise une fenêtre de recherche définie toujours de la même manière. Toutefois, lorsque le macrobloc est près d'un bord de l'image, la fenêtre de recherche est tronquée. Dans ce cas, l'estimateur de mouvement 31 reçoit, par exemple, une instruction lui indiquant de ne pas effectuer de recherche en dehors de la fenêtre tronquée.

Un opérateur 32 est un circuit de compression effectuant une transformée cosinus discrète (DCT), une quantification (QUANT), un balayage zig-zag (ZZ), et un codage de longueur de chaîne de zéros (RLC). Cet opérateur 32 est destiné à effectuer plusieurs fonctions selon le résultat d'une analyse des paramètres précédemment fournis par l'estimateur de mouvement 31. Cette analyse est, par exemple, faite par le séquenceur 16 au moment où ce dernier lit ces paramètres dans l'estimateur de mouvement. L'instruction fournie à l'opérateur 32 après l'analyse indique que le macrobloc en cours de traitement doit subir un codage "intra" ou "prédit".

Selon le codage "intra", l'opérateur 32 reçoit le seul macrobloc en cours de traitement qui subit successivement la transformée cosinus et la quantification. On obtient ainsi un macrobloc dans un format intermédiaire qui est stocké dans une zone tampon de la mémoire 14.

Selon le codage prédit, l'opérateur 32 reçoit le macrobloc en cours de traitement ainsi que le macrobloc prédit correspondant. Ces deux macroblocs sont soustraits et c'est le macrobloc différence qui subit la transformée cosinus et la quantification pour fournir le macrobloc en format intermédiaire.

L'opérateur 32 reçoit pour chaque macrobloc, en tant que paramètre, un coefficient de quantification. Ce coefficient de quantification est par exemple calculé par le séquenceur 16.

Ainsi, l'opérateur 32 comprend deux tampons d'entrée, respectivement pour le macrobloc en cours de traitement et le macrobloc prédicteur, et un tampon de sortie pour fournir les macroblocs en format intermédiaire. Pour fournir un macrobloc prédicteur à l'opérateur 32, le contrôleur mémoire 12 est initialisé avec une adresse de départ calculée par le séquenceur 16 en fonction du vecteur de mouvement précédemment fourni par l'estimateur de mouvement 31.

Les divers paramètres nécessaires au traitement de chaque macrobloc (type, vecteur de mouvement, coefficient de quantification... ) sont rassemblés par l'opérateur 32 en un en-tête qui est inséré devant le macrobloc en format intermédiaire correspondant et écrit en même temps que celui-ci dans la mémoire 14.

Un opérateur 33 est un circuit de reconstruction effectuant les opérations inverses de l'opérateur 32. Le rôle de ce circuit de reconstruction est de reconstituer l'image en cours de codage telle qu'elle sera une fois décodée. C'est dans cette image reconstruite que l'on viendra récupérer les macroblocs prédicteurs de l'image suivante. Le circuit de reconstruction 33 comprend deux tampons d'entrée pour recevoir respectivement un macrobloc en format intermédiaire et un macrobloc prédicteur correspondant, et un tampon de sortie pour fournir les macroblocs reconstruits. Le circuit de reconstruction 33 trouve les paramètres qu'il requiert dans les en-têtes précédant les macroblocs en format intermédiaire.

Un opérateur 34 est un circuit de codage à longueur variable (VLC). Cet opérateur 34 est destiné à recevoir les macroblocs en format intermédiaire et à fournir les données finales codées correspondantes. Les en-têtes précédant les macroblocs en format intermédiaire doivent également être codés à la sortie du circuit VLC 34. En outre, divers autres en-têtes se succédant moins fréquemment, par exemple à chaque image, doivent être insérés.

Une première approche consiste à prévoir le circuit VLC 34 pour qu'il effectue le codage des en-têtes.

Toutefois, comme les codages d'en-tête sont complexes mais se reproduisent à une fréquence relativement basse, il convient particulièrement d'effectuer ces codages de manière logicielle, par exemple par le séquenceur 16 ou, de préférence, par un microprocesseur externe.

Ainsi, le circuit VLC 34 comprend un tampon d'entrée pour recevoir les macroblocs en format intermédiaire et un tampon de sortie pour fournir les données codées. Dans le cas où les en-têtes sont codés par le microprocesseur externe, ils sont fournis sur le bus de données D à un deuxième tampon d'entrée du circuit VLC 34 en transitant, comme toutes les données du bus D, par une zone tampon de la mémoire 14. Ceci est décrit ultérieurement plus en détail. Le circuit VLC 34 commence par mettre bout à bout les parties significatives de l'en-tête codé et se met ensuite à coder le macrobloc en format intermédiaire correspondant.

L'opérateur 34 fournit également des résultats qui sont le nombre de bits des données codées correspondant au macrobloc qui vient d'être traité et l'occupation de la zone de la mémoire 14 affectée à ces données codées. Cette occupation sert à déterminer le choix de codage (le type et le coefficient de quantification Q) des macroblocs suivants.

Un opérateur 35 est un circuit de sortie de données codées. Cet opérateur 35 comprend un tampon d'entrée pour recevoir les données codées par le circuit VLC 34 et fournit celles-ci en série sur une ligne de sortie du système. Selon les normes H.261, il doit également effectuer une mise en trames et insérer des codes de correction d'erreur.

De préférence, le système comprend un microprocesseur externe 37. Celui-ci est relié au bus de commande C et au bus de données D par un circuit d'interface ITF. Ce microprocesseur est, par exemple, celui qui gère le dispositif dans lequel se trouve le système de traitement d'image. Grâce à son interface, le microprocesseur 37 se comporte sensiblement comme un opérateur quelconque relié au système. En fait, le microprocesseur 37 assiste le séquenceur 16 pour effectuer certains calculs complexes décrits à titre d'exemple ci-dessous.

Lorsque l'estimateur de mouvement 31 a trouvé un macrobloc prédicteur, il fournit au séquenceur 16 notamment les composantes du vecteur de mouvement et la distorsion. Il reste, à partir de la distorsion, de prendre une décision sur le type de codage du macrobloc en cours de traitement. Cette décision est prise selon des critères qui varient d'un utilisateur à un autre. Pour cette raison, il est particulièrement utile qu'elle soit effectuée par le microprocesseur afin que l'utilisateur puisse programmer de manière aisée les critères qu'il souhaite utiliser. Bien entendu, le séquenceur 16 exécute aussi des programmes, mais ces programmes sont de préférence stockés dans une mémoire ROM interne à laquelle l'utilisateur n'a pas accès. Ainsi, lorsque le séquenceur 16 a lu la distorsion fournie par l'estimateur de mouvement, il fournit aussitôt cette distorsion et une instruction correspondante à l'interface du microprocesseur 37. L'interface interrompt le microprocesseur qui vient alors lire la distorsion et prendre la décision. Lorsque la décision est prise, le microprocesseur l'écrit dans l'interface qui émet une requête vers le séquenceur 16. Le séquenceur 16 vient alors lire cette décision et la transmet à l'opérateur 32.

Le microprocesseur est en outre chargé de calculer les coefficients de quantification à fournir à l'opérateur 32, car il existe aussi de nombreuses manières de calculer le coefficient de quantification, qui varient d'un utilisateur à un autre. Pour cela, le séquenceur 16 fournit à l'interface du microprocesseur 37, en même temps que la distorsion, le nombre de bits correspondant au macrobloc précédemment codé et l'occupation mémoire des données codées, fournis par le circuit VLC 34. Ainsi, le microprocesseur 37 calcule en même temps la décision et le coefficient de quantification.

Le codage d'en-têtes est également effectué par le microprocesseur, ce qui est particulièrement utile car les en-têtes peuvent comprendre des données privées insérées par l'utilisateur, par exemple un texte à afficher sur l'image, ou bien des bits de bourrage si l'occupation mémoire des données codées est insuffisante.

Pour le codage des en-têtes, le contrôleur mémoire 12 est prévu pour transférer les en-têtes fournis par l'opérateur 32 aussi bien dans la mémoire 14 que dans l'interface du microprocesseur 37. Le microprocesseur 37 est alors interrompu, vient chercher l'en-tête, insère éventuellement des données privées, le code et écrit l'en-tête codé résultant dans la mémoire et une instruction dans l'interface. Les adresses auxquelles les mots des en-têtes sont écrits sont fournis par le microprocesseur 37 au contrôleur mémoire 12 par un bus 38. L'interface émet alors une requête vers le séquenceur 16 qui vient transmettre l'instruction au circuit VLC 34 par le bus de commande C.

Le bus 38, donnant un accès externe à la mémoire 14, peut servir à diverses autres tâches indépendantes du codage/ décodage, par exemple à remplir une zone mémoire d'une image externe à superposer à l'image en cours d'affichage. Un contrôleur d'affichage décrit ultérieurement pourra alors lire l'image en cours d'affichage et l'image externe pour les afficher simultanément.

Le microprocesseur gère l'occupation mémoire des données codées en agissant sur les choix de codage (type de macrobloc, coefficient de quantification). Ceci permet de facilement reprogrammer l'algorithme de choix afin d'obtenir un bon compromis entre la qualité de l'image et le délai de transmission de celle-ci. En effet, plus on peut stocker des données codées en attente de transmission, plus la qualité est améliorée, mais plus le délai est important. Un délai élevé importe peu en télévision, mais est gênant dans un vidéophone.

Le système décrit jusqu'à maintenant correspond à un système de codage. Des éléments non encore décrits correspondent à un système de décodage.

Le système de décodage comprend un opérateur 40 qui est un circuit d'entrée de données codées recevant des données de l'extérieur sur une ligne série. Cet opérateur 40 comprend un tampon de sortie pour fournir les données codées à la mémoire 14. Cet opérateur est similaire à l'opérateur 30 précédemment décrit en ce qui concerne sa connexion aux bus C et D. Selon les normes H.261, il doit en outre effectuer une synchronisation de trame et une correction d'erreurs.

Un opérateur 41 est un circuit effectuant un décodage à longueur variable (VLD). Cet opérateur comprend un tampon d'entrée pour recevoir de la mémoire les données codées précédemment fournies par l'opérateur 40 et un tampon de sortie pour fournir à la mémoire des macroblocs en format intermédiaire, similaires à ceux fournis par l'opérateur 32 lors d'un codage, précédés d'en-têtes.

Le macrobloc en format intermédiaire est ensuite fourni, avec son en-tête, au circuit de reconstruction 33 qui dispose alors de tous les paramètres pour traiter le macrobloc. Ainsi, le circuit de reconstruction 33 sert à la fois au codage et au décodage. Le codage et le décodage sont différenciés par les adresses de départ que fournit le séquenceur 16 au contrôleur mémoire 12. Si un codage et un décodage sont en cours simultanément, le séquenceur 16 affecte le circuit de reconstruction 33, par exemple, alternativement au codage et au décodage.

Les macroblocs reconstruits par le circuit 33 sont fournis à la mémoire 14 pour constituer une image à afficher qui servira à chercher des macroblocs prédicteurs servant à reconstruire les macroblocs de l'image suivante.

Les pixels de l'image reconstruite sont fournis à un contrôleur d'affichage 42 relié au bus de commande C par un circuit d'interface ITF. Dans cet exemple, les pixels sont fournis au contrôleur d'affichage 42 par un bus vidéo VB de la mémoire 14 qui est ici une mémoire vidéo. Le contrôleur d'affichage 42, par l'intermédiaire de son interface, se comporte comme un opérateur. En début d'image, il émet une requête vers le séquenceur 16 afin que celui-ci initialise le contrôleur mémoire 12 avec l'adresse de début de l'image à afficher. Ensuite, lorsqu'il a besoin de données, il émet une requête vers le contrôleur mémoire 12 qui répond à cette requête en préparant un paquet de données dans la mémoire 14 que le contrôleur d'affichage 42 pourra lire séquentiellement par le bus vidéo VB. Le contrôleur d'affichage 42 est, par exemple, le circuit STi11Ol commercialisé par la Société SGS-Thomson.

Les circuits de sortie et d'entrée de données codées 35 et 40 pourront être prévus pour effectuer respectivement un tramage et un détramage destinés à corriger des erreurs de transmission.

La mémoire 14 comporte plusieurs zones de stockage d'images, à savoir une zone pour stocker une image d'entrée (sortie de l'opérateur 30), une zone pour stocker l'image reconstruite au codage, et une zone pour stocker deux images reconstruites au décodage (l'une en cours d'affichage, et l'autre en cours de reconstruction).

Outre ces trois zones d'image, la mémoire comporte des zones tampon, à savoir une pour stocker les macroblocs en format intermédiaire fournis par l'opérateur 32, une pour stocker les données codées en attente de sortie par l'opérateur 35, une pour stocker les données codées arrivant par l'opérateur 40, et une pour stocker les macroblocs en format intermédiaire fournis par l'opérateur 41.

Pour coder et décoder des images au format QCIF (176x144 pixels), le format d'image qui sera utilisé pour le vidéophone, le système requiert 198 ko pour les trois zones d'image. La plus petite taille mémoire commercialement disponible au-dessus de 198 ko est 256 ko, ce qui permet d'avantageusement utiliser le reliquat de 58 ko pour réaliser les diverses zones tampon.

## Revendications

1. Système de traitement multitâches comprenant :
- un bus de données (D) et un bus de commande (C) ;
- une pluralité d'opérateurs (10) dont chacun est prévu pour effectuer un traitement déterminé par une instruction et est susceptible d'émettre une requête de commande (CRQ) pour recevoir une instruction par le bus de commande et d'émettre une requête de transfert (DRQ) en réponse à un acquittement (CACK) de la requête de commande, pour recevoir ou fournir par le bus de données des données en cours de traitement, certains des dits opérateurs (10) émettant des dites requêtes de commande pour fournir des paramètres sur le bus de commande (C) ;
- un contrôleur mémoire (12) pour arbitrer les requêtes de transfert et gérer les transferts de données sur le bus de données entre les opérateurs et une mémoire (14) ; et
- un séquenceur (16) pour arbitrer les requêtes de commande, déterminer des instructions à fournir aux opérateurs et gérer le transfert de ces instructions par le bus de commande, le séquenceur (16) étant prévu pour lire lesdits paramètres et déterminer en fonction de ceux-ci une instruction à fournir à un opérateur.

2. Système de traitement selon la revendication 1, **caractérisé en ce que** le contrôleur mémoire (12) est relié au bus de commande (C) pour recevoir du séquenceur (16), avant un acquittement d'une requête de transfert, une instruction indiquant une zone mémoire dans laquelle le contrôleur mémoire accède aux données à échanger par le bus de données (D) avec l'opérateur (10) ayant émis la requête de transfert.

3. Système de traitement selon la revendication 2, **caractérisé en ce que**, parmi les opérateurs, il y a :
- un circuit d'entrée de pixels (30) pour fournir à la mémoire des pixels d'une image à coder ;
- un circuit d'estimation de mouvement (31) pour recevoir de la mémoire (14) les pixels sous forme de macroblocs successifs ainsi que des fenêtres de recherche correspondantes, et pour fournir sur le bus de commande (C) un vecteur de mouvement et une distorsion permettant de déterminer le type de codage que doit subir un macrobloc courant ;
- un circuit de compression (32) pour recevoir par le bus de commande le type de codage du macrobloc courant, recevoir de la mémoire le macrobloc courant et, selon le type de codage, un macrobloc prédicteur, et pour fournir à la mémoire un macrobloc en format intermédiaire correspondant au macrobloc courant comprimé ; et
- un circuit de sortie de données codées (34) pour recevoir de la mémoire les macroblocs traités.

4. Système de traitement selon la revendication 3, **caractérisé en ce que**, parmi les opérateurs, il y a :
- le circuit de compression (32) comprenant un circuit de transformée cosinus discrète (DCT) et un circuit de quantification utilisant un coefficient de quantification reçu par le bus de commande en même temps que le type de macrobloc ;
- un circuit de codage à longueur variable (VLC) (34) pour recevoir un en-tête de macrobloc contenant le vecteur de mouvement, le coefficient de quantification et le type de macrobloc, recevoir de la mémoire le macrobloc en format intermédiaire, fournir à la mémoire des données codées correspondant à l'en-tête et au macrobloc en format intermédiaire, et fournir sur le bus de commande une information sur l'occupation des données codées dans la mémoire ; et
- un circuit d'interface avec un microprocesseur (37) pour fournir au microprocesseur des paramètres par le bus de commande afin que le microprocesseur détermine des instructions ou des paramètres à fournir à des opérateurs par le bus de commande.

5. Système de traitement selon la revendication 4, **caractérisé en ce que** les paramètres fournis au microprocesseur (37) comprennent la distorsion et l'occupation des données codées dans la mémoire, à l'aide desquels le microprocesseur détermine le choix de codage des macroblocs suivants.

6. Système de traitement selon la revendication 4, **caractérisé en ce que** les paramètres fournis au microprocesseur (37) comprennent l'en-tête que le microprocesseur code et fournit au circuit VLC, ce dernier étant prévu pour recevoir l'en-tête codé et le fournir directement devant les données codées correspondant au macrobloc.

7. Système de traitement selon la revendication 2, **caractérisé en ce que**, parmi les opérateurs, il y a :
- un circuit d'entrée de données codées (40) pour fournir à la mémoire (14) un paquet de données codées ;
- un circuit de décodage à longueur variable (VLD) (41) pour recevoir un paquet de données codées de la mémoire, et fournir à la mémoire un macrobloc en format intermédiaire précédé d'un en-tête ;
- un circuit de reconstruction (33) pour recevoir de la mémoire le macrobloc en format intermédiaire, son en-tête, et, selon les paramètres contenus dans l'en-tête, un macrobloc prédicteur, et pour fournir un macrobloc reconstruit correspondant à la mémoire ; et
- un circuit d'affichage (42) pour recevoir de la mémoire l'image constituée des macroblocs reconstruits.

8. Système de traitement selon la revendication 6, **caractérisé en ce que** la mémoire (14) est une mémoire vidéo fournissant des pixels à afficher au circuit d'affichage (42) par un bus vidéo (VB) géré par le contrôleur mémoire (12).

## Claims

1. A multitask processing system including:
- a data bus (D) and a command bus (C);
- a plurality of operators (10), each of which is provided to perform a processing determined by an instruction and is likely to issue a command request (CRQ) for receiving an instruction through the command bus and to issue a transfer request (DRQ) on response to an acknowledgment (CACK) of the command request, for receiving or supplying data being processed through the data bus, some of said operators (10) issuing said command requests for supplying parameters on the command bus (C) ;
- a memory controller (12) to arbitrate the transfer requests and manage the data transfers on the data bus between the operators and a memory (14); and
- a sequencer (16) to arbitrate the command requests, determine instructions to supply the operators with and manage the transfer of said instructions through the command bus, the sequencer (16) being provided to read said parameters and determine an instruction to supply to an operator with respect to said parameters.

2. A processing system according to claim 1, **characterized in that** the memory controller (12) is linked to the command bus (C) for receiving from the sequencer (16), before the acknowledgment of a transfer request, an instruction indicating a memory field in which the memory controller has access to the data to be exchanged through the data bus (D) with the operator (10) having issued the transfer request.

3. A processing system according to claim 2, **characterized in that**, among the operators, there is provided:
- a pixel input circuit (30) for supplying the memory with pixels of a picture to be coded;
- a motion estimating circuit (31) for receiving from the memory (14) the pixels as successive macroblocks as well as corresponding search windows, and for supplying on the command bus (C) a motion vector and a distortion allowing to determine the type of coding that a current macroblock must undergo;
- a compression circuit (32) for receiving through the command bus the type of coding of the current macroblock, receiving from the memory the current macroblock and, according to the type of coding, a predictive macroblock, and for supplying the memory with a macroblock in intermediate format corresponding to the current compressed macroblock; and
- an output circuit for coded data (34) for receiving the processed macroblocks from the memory.

4. A processing system according to claim 3, **characterized in that**, among the operators, there is provided:
- the compression circuit (32) including a discrete cosine transform circuit (DCT) and a quantization circuit using a quantization coefficient received through the command bus together with the type of macroblock;
- a variable length coding circuit (VLC) (34) for receiving a macroblock header containing the motion vector, the quantization coefficient and the type of macroblock, for receiving the macroblock in intermediate format from the memory, for supplying the memory with coded data corresponding to the header and to the macroblock in intermediate format and supplying on the command bus an information about the memory occupation of the coded data; and
- an interface circuit with a microprocessor (37) for supplying the microprocessor with parameters through the command bus so that the microprocessor determines instructions or parameters to supply operators with through the command bus.

5. A processing system according to claim 4, **characterized in that** the parameters supplied to the microprocessor (37) include the distortion and the memory occupation of the coded data, with the help of which the microprocessor determines the coding selection of the following macroblocks.

6. A processing system according to claim 4, **characterized in that** the parameters supplied to the microprocessor (37) include the header that the microprocessor codes and supplies to the VLC circuit, said VLC circuit being provided to receive the coded header and supply it directly before the coded data corresponding to the macroblock.

7. A processing system according to claim 2, **characterized in that**, among the operators, there is provided:
- an input circuit for coded data (40) for supplying the memory (14) with a coded data burst;
- a variable length decoding circuit (VLD) (41) for receiving a coded data burst from the memory and supplying the memory with a macroblock in intermediate format preceded by a header;
- a reconstruction circuit (33) to receive from the memory the macroblock in intermediate format, its header, and, according to the parameters contained in the header, a predictive macroblock, and to supply the memory with a corresponding reconstructed macroblock; and
- a display circuit (42) for receiving the picture constituted by the reconstructed macroblocks from the memory.

8. A processing system according to claim 6, **characterized in that** the memory (14) is a video memory supplying the display circuit (42) with pixels to be displayed through a video bus (VB) managed by the memory controller (12).

## Patentansprüche

1. Multitask-Verarbeitungssystem, welches umfaßt:
- einen Datenbus (D) und einen Befehlsbus (C);
- mehrere Operatoren (10), deren jeder jeweils zur Ausführung einer durch einen Befehl bestimmten Verarbeitung vorgesehen ist und jeweils eine Befehlsanforderung (CRQ) zum Empfang eines Befehls über den Befehlsbus, und - nach einer Quittierung bzw. Bestätigung (CACK) der Befehlsanforderung - eine Transferanforderung zum Empfang oder zur Abgabe von in Bearbeitung befindlichen Daten über den Datenbus, aussenden kann, wobei bestimmte der genannten Operatoren (10) die genannten Befehlsanforderungen zur Zufuhr von Parametern über den Befehlsbus (C) aussenden;
- eine Speichersteuervorrichtung (12) zur Arbitrage über die Transfer-Anforderungen und Verwaltung und Abwicklung der Datentransfers über den Datenbus zwischen den Operatoren und einem Speicher (14); sowie
- einen Sortierer (16), welcher die Befehlsanforderungen arbitriert, den Operatoren zuzuführende Befehle bestimmt und den Transfer dieser Befehle über den Befehlsbus verwaltet und abwickelt, wobei der Sortierer (16) dazu vorgesehen ist, die genannten Parameter zu lesen und in Abhängigkeit von diesen einen einem Operator zuzuführenden Befehl zu bestimmen.

2. Verarbeitungssystem nach Anspruch 1, **dadurch gekennzeichnet, daß** die Speichersteuervorrichtung (12) mit dem Befehlsbus (C) verbunden ist, derart daß sie von dem Sortierer (16) vor einer Quittierung bzw. Bestätigung einer Transfer-Anforderung einen Befehl erhält, welcher eine Speicherzone bezeichnet, in welcher die Speichersteuer-Vorrichtung Zugang zu Daten hat, welche über den Datenbus (D) mit dem Operator (10), der die Transfer-Anforderung ausgesendet hat, ausgetauscht werden sollen.

3. Verarbeitungssystem nach Anspruch 2, **dadurch gekennzeichnet, daß** zu den Operatoren gehören:
- eine Pixel-Eingangsschaltung (30) zur Zufuhr von Pixeln eines zu kodierenden Bilds an den Speicher;
- eine Schaltung (31) zur Bewegungsabschätzung, welche von dem Speicher (14) die Pixel in Form aufeinanderfolgender Makroblocks sowie entsprechende Suchfenster zugeführt erhält und über den Befehlsbus (C) einen Bewegungsvektor und eine Verzerrung zuführt, welche die Bestimmung des Kodierungstyps gestatten, welchem ein laufender Makroblock unterworfen werden soll;
- eine Kompressionsschaltung (32), welche über den Befehlsbus den Kodierungstyp des laufenden Makroblocks, von dem Speicher den laufenden Makroblock und, je nach dem Kodierungstyp, einen Prädiktor-Block zugeführt erhält und dem Speicher einen Makroblock in Zwischenformat entsprechend dem komprimierten laufenden Block zugeführt erhält; sowie
- eine Ausgangsschaltung (34) für kodierte Daten, welche von dem Speicher die verarbeiteten Makroblöcke zugeführt erhält.

4. Verarbeitungssystem nach Anspruch 3, **dadurch gekennzeichnet, daß** zu den Operatoren gehören:
- die Kompressionsschaltung (32), welche eine Schaltung für diskrete Cosinus-Transformation (DCT) und eine Quantifizierungsschaltung umfaßt, welche einen über den Befehlsbus gleichzeitig mit dem Typ des Makroblocks zugeführten Quantifizierungskoeffizienten verwendet;
- eine Schaltung (34) zur VLC-Kodierung mit variabler Länge, welche ein Makroblock-Kopfteil, welches den Bewegunasvektor, den Quantifizierungs-Koeffizienten und den Typ des Makroblocks enthält, zugeführt erhält sowie aus dem Speicher den Makroblock im Zwischenformat zugeführt erhält, und welche dem Speicher kodierte Daten entsprechend dem Kopfteil und dem Makroblock im Zwischenformat zuführt sowie auf dem Befehlsbus eine Information über die Belegung der kodierten Daten in dem Speicher zuführt; sowie
- eine Interfaceschaltung mit einem Mikroprozessor (37), zur Zufuhr von Parametern über den Befehlsbus an den Mikroprozessor, derart daß der Mikroprozessor Befehle oder Parameter zur Zufuhr an Operatoren über den Befehlsbus bestimmt.

5. Verarbeitungssystem nach Anspruch 4, **dadurch gekennzeichnet, daß** die dem Mikroprozessor (37) zugeführten Parameter die Verzerrung und die Belegung der kodierten Daten in dem Speicher umfassen, mit deren Hilfe der Mikroprozessor die Wahl der Kodierung der folgenden Makroblöcke bestimmt.

6. Verarbeitungssystem nach Anspruch 4, **dadurch gekennzeichnet, daß** die dem Mikroprozessor (37) zugeführten Parameter den Kopfteil umfassen, welchen der Mikroprozessor kodiert und der VLC-Schaltung zuführt, wobei diese VLC-Schaltung den kodierten Kopfteil zugeführt erhält und ihn direkt vor den dem Makroblock entsprechenden Daten zuführt.

7. Verarbeitungssystem nach Anspruch 2, **dadurch gekennzeichnet, daß** zu den Operatoren gehören:
- eine Eingangsschaltung für kodierte Daten (40), welche dem Speicher (14) ein Paket kodierter Daten zuführt;
- eine Dekodierungsschaltung (41) zur Dekodierung mit variabler Länge (VLD), welche ein Paket kodierter Daten von dem Speicher zugeführt erhält und dem Speicher einen Makroblock im Zwischenformat mit vorgeschaltetem Kopfteil zuführt;
- eine Rekonstruktionsschaltung (33), welche von dem Speicher den Makroblock im Zwischenformat, sein Kopfteil und, je nach den in dem Kopfteil enthaltenen Parametern, einen Prädiktor-Makroblock zugeführt erhält und einen entsprechenden rekonstruierten Makroblock dem Speicher zuführt; sowie
- eine Anzeige- bzw. Wiedergabeschaltung (42), welche von dem Speicher das aus den rekonstruierten Makroblöcken gebildete Bild zugeführt erhält.

8. Verarbeitungssystem nach Anspruch 6, **dadurch gekennzeichnet, daß** der Speicher (14) ein Videospeicher ist, welcher der Anzeige- bzw. Wiedergabeschaltung (42) wiederzugebende Pixel über einen durch die Speichersteuervorrichtung (12) verwalteten Videobus (VB) zuführt.
